# EUROPEAN PATENT SPECIFICATION

(11) **EP 2 535 681 B1**
(45) Date of publication and mention of the grant of the patent: **06.01.2016**
(21) Application number: 12171189.9
(22) Date of filing: 07.06.2012
(51) Int. Cl.: G01B 11/02, G01B 11/06, G01B 11/24, G03B 35/10, G06T 7/00, H04N 13/00

(54) **Device for estimating the depth of elements of a 3D scene**
Vorrichtung zur Schätzung der Tiefe eines Elements einer 3D-Szene
Dispositif d'estimation de la profondeur d'éléments d'une scène en 3D

(30) Priority: 17.06.2011 FR 1155330
(43) Date of publication of application: 19.12.2012
(73) Proprietor: Thomson Licensing, 92130 Issy-les-Moulineaux (FR)
(72) Inventor: Drazic, Valter, 35576 Cesson-Sevigne (FR)
(74) Representative: Vidon Brevets & Stratégie

(56) References cited:
- EP-A1- 2 214 139
- EP-A1- 2 239 706
- VALTER DRAZIC: "Optimal depth resolution in plenoptic imaging", MULTIMEDIA AND EXPO (ICME), 2010 IEEE INTERNATIONAL CONFERENCE ON, IEEE, PISCATAWAY, NJ, USA, 19 July 2010 (2010-07-19), pages 1588-1593, XP031761536, ISBN: 978-1-4244-7491-2
- ADELSON E H ET AL: "SINGLE LENS STEREO WITH A PLENOPTIC CAMERA", IEEE TRANSACTIONS ON PATTERN ANALYSIS AND MACHINE INTELLIGENCE, IEEE SERVICE CENTER, LOS ALAMITOS, CA, US, vol. 14, no. 2, 1 February 1992 (1992-02-01), pages 99-106, XP000248474, ISSN: 0162-8828, DOI: 10.1109/34.121783
- TOM E BISHOP ET AL: "Light field superresolution", 2009 IEEE INTERNATIONAL CONFERENCE ON COMPUTATIONAL PHOTOGRAPHY (ICCP 2009), IEEE, US, 16 April 2009 (2009-04-16), pages 1-9, XP031740269, ISBN: 978-1-4244-4534-9
- REN NG ET AL: "Light Field Photography with a Hand-held Plenoptic Camera", STANDFORD TECH REPORT CTSR,, 1 February 2005 (2005-02-01), pages 1-11, XP008138449,

## Description

### Domain of the invention:

The invention relates to a method and a device for estimating the depth of objects of a scene using the focus of an optical system imaging the objects of said scene.

### Prior art:

The article by Paolo Favaro entitled "Depth from focus/defocus" published on 25 June 2002 (http://homepages.inf.ed.ac.uk/rbf/CVonline/LOCAL COPIES/FAVARO1/dfdtuto rial.html) sums up the optical methods for the establishment of depth maps. This article indicates that methods based on optical focusing go through the dynamic changing of parameters of image estimation means during the depth evaluation process.

The article by John Ens et al., published 02 February 1993 in the review "IEEE transactions on pattern analysis and machine intelligence", Vo1.15, N°2, and entitled "An investigation of methods for determining depth from focus" indicate that the distance calculation of different points of a scene is carried out via the modelling of effects that the focal parameters of a camera have on images captured by that camera in conditions of low field depth. http://www.sc.ehu.es/ccwgrrom/transparencias/articulos-alumnos-doct-2002/josu-larra%2596aga/00192482.pdf

Document EP 2,214,139 and article by Valter Dragic entitled "Optimal depth resolution in plenoptic imaging" published on 19 July 2010 in the review "IEEE ICME", are further relevant documents dealing with depth estimation of object elements in a 3D scene.

### Summary of the invention:

One purpose of the invention is to propose an advantageous device for estimation of the depth of object elements distributed in a 3D scene. Consequently, the purpose of the invention is a device as defined in claim 1.

The object elements correspond to object zones of the scene for which the size and the position in the scene are defined in a way that they can be imaged onto one of the pixels of the light sensor.

In practice, when the focusing is carried out on an element of the scene, the light flow from this element reaches a single pixel of the light sensor, which is situated at the area where this element is imaged via the lens. The focus is adjusted in a way to obtain the maximum flow on this pixel. In conventional devices, when there is noticeable deviation from the focus, the light flow can light up other pixels of the sensor, which can interfere with the focus adjustment process.

Preferably, each of said groups comprises the same number of pixels.

Preferably, in each group, the pixels are ordered geometrically in the same way, and the means to control the pixels of the light spatial modulator are adapted so that, in each group, each pixel passes successively into the passing state in the same geometric order.

Preferably, each group contains 3x3 pixels.

Advantageously, the device for estimation of the depth may also be used to capture an image of the scene. In such a situation, the pixels of the light sensor which are used to estimate the depth may be subdivided into numerous subpixels according to the required definition of the images to capture.

### Brief description of the drawings:

The invention will be better understood upon reading the following description, provided as a non-restrictive example and referring to the annexed drawings wherein:
- figure 1 diagrammatically shows the method for focusing that is used in the depth estimation device according to the invention,
- figure 2 shows the light intensity variation captured by a pixel of the sensor of the device according to the invention during focusing on the object element of the scene that corresponds to it, using the focusing method shown in figure 1,
- figure 3 shows the problem of interference of the lighting of a pixel of the sensor of the device used for focusing on an object element of the scene by light coming from another object element,
- figure 4 diagrammatically shows a preferred embodiment of a device for estimation of the depth of object elements of the 3D scene according to the invention,
- figure 5 shows, in an analogous manner to figure 2, the variation in light intensity captured by different pixels of the sensor of the device of figure 4, during focusing on the object elements of the scene corresponding to them
- figure 6 shows an embodiment of the grouping of pixels of the light spatial modulator of the device of figure 4, where, according to the invention, a single pixel in each group is in the "passing" state,
- figure 7 is identical to figure 6 with the slight difference in that, in each group, another pixel has passed into the "passing" state, the other pixels being in the "blocking" state.

### Detailed description of the embodiments of the invention:

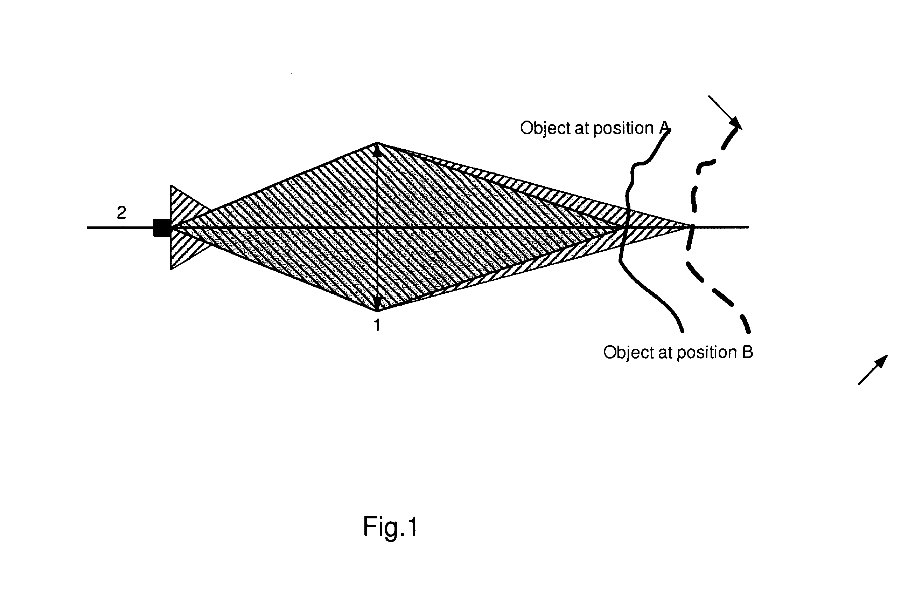

In reference to figure 1, this description will begin with a description of one of the general principles on which the method for measurement of depth is based according to the invention, using a simplified depth estimation device. In this figure, the same object of a 3D scene is positioned at two different depths: position A and position B.

The simplified depth estimation device comprises:
- an optical system comprising a lens 1 and a bit mapped light sensor 2 positioned on the optical axis of the lens that is able to image on this sensor 2 any object element of the scene at the instant that is situated on the optical axis of the lens,
- means (not shown) to adjust the focusing of this optical system on this object element, and
- means (not shown) able to deduce the depth of said object element of the adjustment of the focusing on this element.

The bit mapped light sensor 2 here comprises a single pixel of a size corresponding approximately to that of the image of an object element of the scene situated on the optical axis of the lens, when the focusing of the optical system on this element is carried out.

Now will be described the method for focusing on which the invention is based. If an object of the scene is positioned in position B (object drawn in a broken line in figure 1), the light streams coming from the object element that is situated on the optical axis light the unique pixel of the sensor 2 over a light zone that widely extends beyond that of the pixel of the sensor: see figure 1.

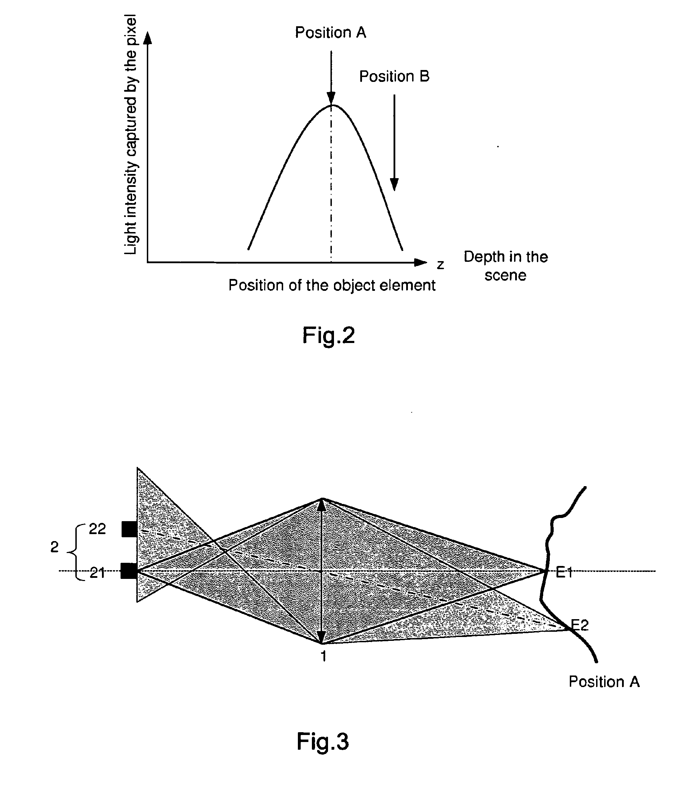

As the object is moved from position B towards position A along the optical axis, this lighting zone of the unique pixel of the sensor shrinks so that the light intensity captured by the pixel increases in accordance with the curve of figure 2. On arriving at position A (the object drawn in a solid line in figure 1), the light intensity is at a maximum. Following the displacement of the object in the same direction towards the lens 1, the light intensity on this pixel begins to diminish according to the curve of figure 2.

The position A of the object element that corresponds to the maximum of light streams captured by the single pixel of the sensor 2 is considered as the focus position of this element on the sensor.

This characteristic is one of the bases of the invention.

According to the invention, the depth estimation device thus comprises means for adjusting the focus on an object element whose depth is to be evaluated, that are able to adjust the focus by fixing on the maximum of light streams that come from this element and that are captured by the sensor 2. For the requirements of the explanation of the basic principle, the focus was carried out above by variation of the position of the object, but the same effect is obtained by varying the position of the lens or the position of lenses of the objective as is done for the usual shot objectives.

According to the invention, the depth estimation device also comprises means able to deduce the depth of the object element of the adjustment of the focus that has just been described. These means can be based on a depth calibration or be based on standard optical calculations based on the characteristics and position of components of the optical system. These means that are themselves known will thus not be described in detail.

In reference to figure 3, a more complete example, which does not fall under the scope of the invention, will now be described, the problem that it poses and the solution that the invention provides. The depth estimation device is identical to the preceding device with the slight difference that the light sensor comprises a plurality of pixels 21, 22 preferably distributed uniformly, in a same image plane of the objective 1 as the single pixel of the sensor of the preceding device.

This arrangement now enables the depth to be evaluated, in the scene, not only of an object element situated on the optical axis as previously, this element E1 being imaged on the central pixel 21 as previously described, but also object elements positioned outside of the optical axis, such as E2, these elements being imaged on another pixel of the same sensor such as the pixel 22. But, as can be seen in figure 3, when the focus is carried out for the element E1 on the pixel 21 of the sensor 2, it is very far from the focus adjustment for the element E2 on the pixel 22 that corresponds to it, so that the light streams coming from the element E2 partly light the pixel 21, which interferes with the determination of the maximum light streams on this pixel and the estimation of the depth of the element E1.

In order to overcome this problem, it is proposed to improve the depth estimation device in the following way.

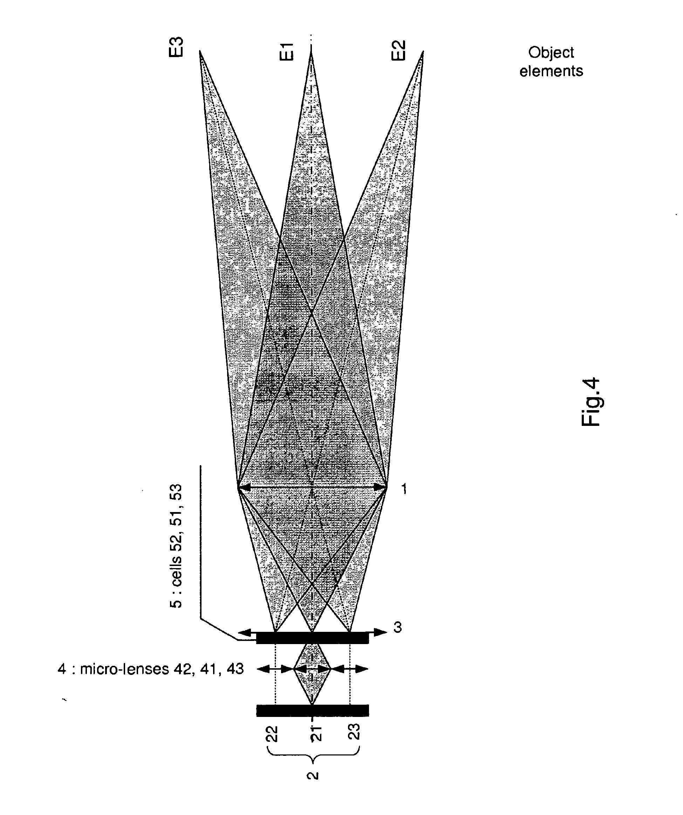

According to this improvement, and in reference to figure 4, the optical system previously described also comprises:
- a relay imaging system 3 positioned approximately in the image plane of the objective 1, able to relay to the image object elements of the scene on the bit mapped light sensor 2 via a system of micro-lenses 4,
- a light spatial modulator (spatial light modulator) 5, also bit mapped, attached to the input, on the sensor side, of the relay imaging system 3.

More specifically, this optical system is such that the optical axis of each micro-lens 41 (central position), 42, 43 passes through the centre of another pixel 21 (central position), 22, 23 of the bit mapped light sensor 2 and through the centre of another pixel 51 (central position), 52, 53 of the light spatial modulator 5. More specifically, this optical system is such that each micro-lens 41, 42, 43 is able, in combination with the relay imaging system 3 and the objective 1, to image another object element E1, E2, E3 of the scene on the pixel 21, 22, 23 of the bit mapped light sensor 2 that is situated on the optical axis of this micro-lens, via the pixel 51, 52, 53 of the light spatial modulator 5 that is also situated on the optical axis of this micro-lens.

Preferably each pixel of the sensor has a size corresponding approximately to that of the image of an object element of the scene, when the focusing of the optical system on this element is carried out.

Each pixel of the light spatial modulator 5 is for example a cell of liquid crystals, preferably bi-stable, that is to say having a passing state of the light and a blocking state of the light.

According to a **first embodiment** of this improved embodiment, the depth estimation device also comprises means to control the pixels 51, 52, 53 of the light spatial modulator 5 so that, as will be made clear in more detail later, each pixel passes successively into the passing state while all the others are in the blocking state.

The method for focussing and depth estimation using this more complete device will now be described, applied to three object elements E1, E2 and E3, the element E1 is on the optical axis, the element E3 is above the axis, the element E2 is below the axis, these three elements can belong to the same object or to different objects.

Using the control means of the light spatial modulator, the pixel 51, 52, 53 of the modulator are successively put into passing state, the two others remaining in the blocking state.

When the pixel 51 is in the passing state (and the two others in the blocking state), the optical system can focus on the element E1 as previously described using pixel 21 if the sensor 2, without be interfered with by the light coming from the other elements of the object, specifically E2 and E3, because the pixels 52 and 53 of the modulator 5 are in the blocking state. Thus the disadvantage previously described in reference to figure 3 is avoided. From the adjustment of the focusing on the element E1, the depth of this element in the object space is then deduced.

Likewise, when the pixel 52 (respectively 53) is in the passing state, the focusing of the optical system on the element E2 (respectively E3) can be carried out in the same way using the pixel 22 (respectively 23) of the sensor 2, without being interfered with by light from the other object elements because the other pixels of the modulator 5 are in the blocking state. Thus the disadvantage previously described in reference to figure 3 is also avoided. From the adjustment of the focusing on the element E2, the depth of this element in the object space is then deduced.

Thus, by successively passing each pixel of the modulator into the passing state while maintaining the other pixels in the blocking state, it can be seen that the object space is scanned around the optical axis of the optical system, in a way to deduce the depth of each object element closest to the objective in this space.

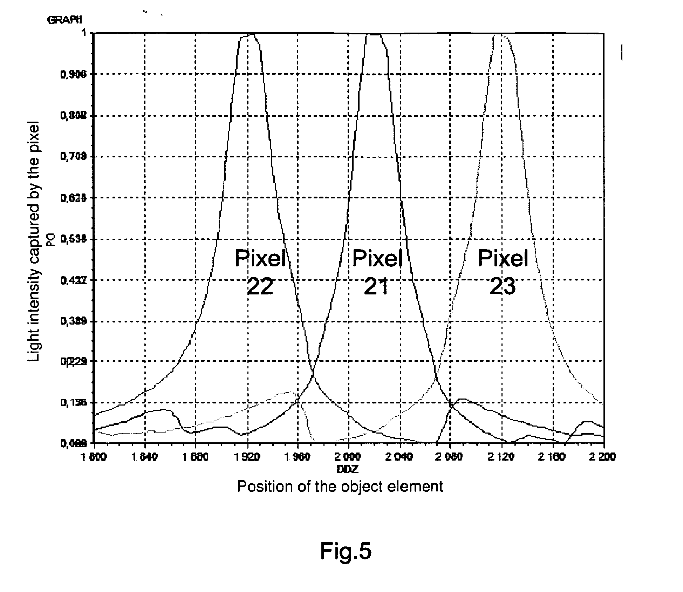

Figure 5 shows light intensity variations perceived by each pixel 21, 22, 23 of the sensor 2 during the preceding three successive cycles of variations in focusing. In the lower part of the figure, for each pixel used for the focusing of an object element, the incidence of "parasite" lighting from other object elements can be seen. It can be seen that this "parasite" lighting does not prevent the maximum lighting from being detected that correctly corresponds to the focus. This illustrates the advantage of the improvement to the invention. The more the number of pixels of the sensor 2 and the modulator 5 of the depth estimation device is high, the more the density of the meshing of elements in the object space is increased, that is to say that of the meshing of the depth map of the object space. Obviously, the number of micro-lenses in the system 4 is increased in the same proportions.

In practice, given the number of pixels that are required to obtain a depth map sufficiently dense for a 3D scene, the duration required for a complete scanning of the object space corresponds to the number of pixels multiplied by the duration of a cycle of variation of the focusing. This scanning total duration can become prohibitive, particularly if the objects of the scene are susceptible to move during the depth estimation operation.

The **second embodiment** of this improvement to the invention will now be presented that enables in addition this problem of scanning duration to be resolved.

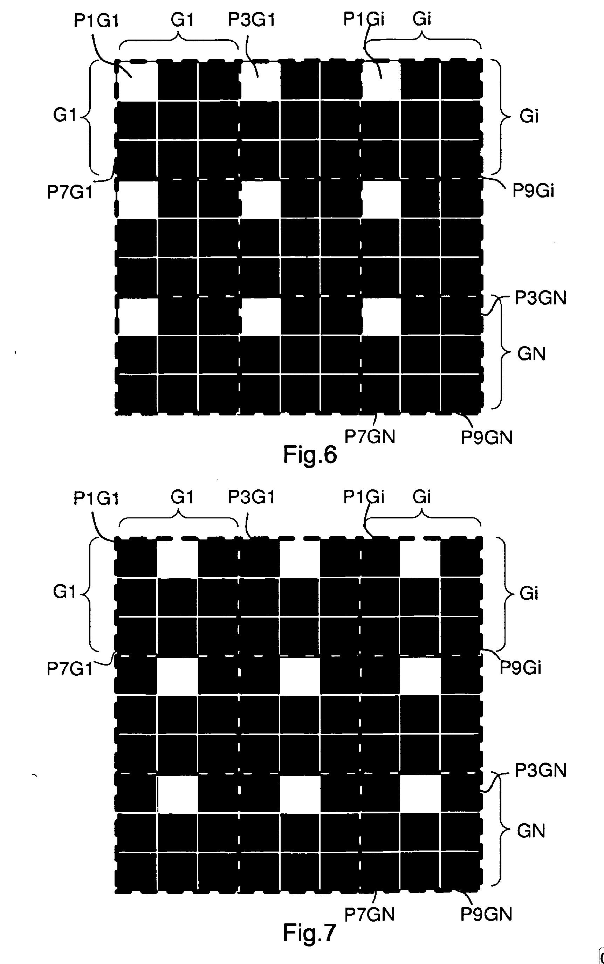

According to this embodiment and in reference to figure 6, the pixels of the light spatial modulator are distributed into several groups G1,....Gi, Gn of adjacent pixels. Preferably each group has the same number of pixels, here 3x3 pixels: P1 G1, ..., P3G1, ..., P7G1, ..., P9G1 for the first group G1, ..., P1 Gi, ..., P9Gi for the group Gi, ..., up to P1 GN, ..., P3GN, ..., P7GN, ..., P9GN for the last group GN.

The means to control the pixels of the light spatial modulator 5 are adapted so that, in each group, a pixel is always in the passing state while the other pixels of the same group remain in the blocking state, and so that, in each group, each pixel passes successively into the passing state. Preferably, the pixels are ordered according to the same predetermined geometric order in each group, and each pixel passes successively into the passing state according to a same order in each group. For example, in each group, it is first the first pixel that is in the passing state as in figure 6, then the second in each group as in figure 7, and so on.

To implement the device according to this second embodiment, the procedure is as described for the first embodiment, with the following difference. When the pixels of the light spatial modulator are in the states shown in figure 6 (black square = blocking state, white square = passing state), during a focusing variation cycle, the variations in light intensity captured by each of the pixels of the sensor that correspond to the pixels in the passing state of the modulator are recorded simultaneously. At each focus variation cycle, 9 curves are thus obtained of the type shown in figure 2. From each curve recorded by a pixel, an adjustment of the focus is deduced corresponding to the maximum of captured light intensity, from which is estimated as previously the depth of the object element whose image was focused on this pixel. It continues in the same way when the pixels of the light spatial modulator pass into the states shown in figure 7 (black square = blocking state, white square = passing state), and so on until each pixel of each group has passed once into the passing state. Thus, the number of focus variation cycles required for a complete scanning of the object space corresponds to the number of pixels in each group (here 9) and not the total number of pixels of the sensor, which advantageously enables the duration required for the acquisition of depth values of object elements of the 3D scene to be considerably reduced.

More numerous groups of pixels can be used without departing from the invention, but it has be remarked that the number of nine pixels in each group, uniformly distributed in both directions, vertical and horizontal, best enables the scanning speed of the object space to be improved while limiting the lighting parasite risks between the different pixels of the sensor, as described previously.

Preferably, the relay imaging system 3 is telecentric across the objective 1. The present invention, that was described above on the basis of non-restrictive examples, is defined by the appended claims.

## Claims

1. Device for estimating the depth of object elements of a 3D scene comprising:
- an optical system itself comprising a light sensor (2) with a plurality of pixels (21, 22, 23) and a lens (1) able to image the object elements (E1, E2, E3) of the scene on the pixels of said light sensor,
- means to adjust the focus of the optical system onto any one of the object elements of said scene that are adapted to adjust said focus by fixing on the maximum of light flow coming from said object element and captured by one of the pixels of said pixelated light sensor, and
- means suitable for deducing the depth of said object element from the adjustment of said focus on said object element of said scene,
**characterized in that**:
- said optical system also comprises a telecentric relay imaging system (3, 4) positioned approximately in the image plane of said lens, able to relay the image of said object elements onto said pixelated light sensor via a system of micro-lenses (41,42,43), and a spatial light modulator (5), also pixelated, attached to the input of said relay imaging system,
where the optical axis of each micro-lens passes through the centre of a different pixel of said pixelated light sensor and through the centre of a different pixel of said spatial light modulator,
where each micro-lens is adapted, in combination with said relay imaging system (3,4) and said lens (1), to image an object element of the scene onto the pixel of said pixelated light sensor that is situated on the optical axis of the micro lens, through the pixel of said spatial light modulator that is also situated on the optical axis of the micro-lens,
where the pixels of the spatial light modulator are distributed into one group or a plurality of groups of adjacent pixels (G1, ..., Gi, ..., GN),
- said device also comprises means to control the pixels (51, 52, 53) of the spatial light modulator (5) so that, simultaneously, in each group, one pixel is in the passing state while all the other pixels of the same group are in the blocking state, and so that, in each group, each pixel passes successively into the passing state.

2. Depth estimation device according to claim 1 **characterized in that** each of said groups comprises the same number of pixels.

3. Depth estimation device according to claim 2 **characterized in that**, in each group, the pixels are ordered geometrically in the same way, and **in that** the means to control the pixels of the spatial light modulator (5) are adapted so that, in each group, each pixel passes successively into the passing state in the same geometric order.

4. Depth estimation device according to any one of claims 2 to 3 **characterized in that** each group contains 3x3 pixels.

## Patentansprüche

1. Vorrichtung zum Schätzen der Tiefe von Objektelementen einer 3D-Szene, wobei die Vorrichtung umfasst:
- ein optisches System, das selbst einen Lichtsensor (2) mit mehreren Pixeln (21, 22, 23) und eine Linse (1), die die Objektelemente (E1, E2, E3) der Szene auf die Pixel des Lichtsensors abbilden kann, umfasst,
- Mittel zum Einstellen des Brennpunkts des optischen Systems auf eines der Objektelemente der Szene, die dafür ausgelegt sind, den Brennpunkt durch Fixieren auf das Maximum des von dem Objektelement kommenden und durch eines der Pixel des gepixelten Lichtsensors erfassten Lichtflusses einzustellen, und
- Mittel, die dafür geeignet sind, aus der Einstellung des Brennpunkts auf das Objektelement der Szene die Tiefe des Objektelements zu folgern,
**dadurch gekennzeichnet, dass**
- das optische System außerdem ein näherungsweise in der Bildebene der Linse positioniertes telezentrisches Weiterleitungsabbildungssystem (3, 4), das das Bild der Objektelemente über ein System von Mikrolinsen (41, 42, 43) auf den gepixelten Lichtsensor weiterleiten kann, und einen räumlichen Lichtmodulator (5), der ebenfalls gepixelt ist, der an dem Eingang des Weiterleitungsabbildungssystems angebracht ist, umfasst,
wobei die optische Achse jeder Mikrolinse durch das Zentrum eines anderen Pixels des gepixelten Lichtsensors und durch das Zentrum eines anderen Pixels des räumlichen Lichtmodulators geht,
wobei jede Mikrolinse dafür ausgelegt ist, zusammen mit dem Weiterleitungsabbildungssystem (3, 4) und mit der Linse (1) ein Objektelement der Szene auf das Pixel des gepixelten Lichtsensors, das sich auf der optischen Achse der Mikrolinse befindet, durch das Pixel des räumlichen Lichtmodulators, das sich ebenfalls auf der optischen Achse der Mikrolinse befindet, abzubilden,
wobei die Pixel des räumlichen Lichtmodulators in einer Gruppe oder in mehreren Gruppen angrenzender Pixel (G1, ..., Gi, ..., GN) verteilt sind,
- wobei die Vorrichtung außerdem ein Mittel umfasst, um die Pixel (51, 52, 53) des räumlichen Lichtmodulators (5) in der Weise, dass gleichzeitig in jeder Gruppe ein Pixel in dem Durchlasszustand ist, während alle anderen Pixel derselben Gruppe in dem Sperrzustand sind, und in der Weise, dass in jeder Gruppe jedes Pixel aufeinanderfolgend in den Durchlasszustand übergeht, zu steuern.

2. Tiefenschätzvorrichtung nach Anspruch 1, **dadurch gekennzeichnet, dass** jede der Gruppen dieselbe Anzahl von Pixeln umfasst.

3. Tiefenschätzvorrichtung nach Anspruch 2, **dadurch gekennzeichnet, dass** die Pixel in jeder Gruppe geometrisch in derselben Weise geordnet sind und dass die Mittel zum Steuern der Pixel des räumlichen Lichtmodulators (5) dafür ausgelegt sind, dass in jeder Gruppe jedes Pixel aufeinanderfolgend in den Durchlasszustand in derselben geometrischen Ordnung übergeht.

4. Tiefenschätzvorrichtung nach einem der Ansprüche 2 bis 3, **dadurch gekennzeichnet, dass** jede Gruppe 3 x 3 Pixel enthält.

## Revendications

1. Dispositif d'estimation de la profondeur d'éléments d'objet d'une scène 3D comprenant :
- un système optique lui-même comprenant un capteur de lumière (2) avec une pluralité de pixels (21, 22, 23) et une lentille (1) capable de capturer l'image des éléments d'objet (E1, E2, E3) de la scène sur les pixels de ce capteur de lumière,
- des moyens d'ajuster la focalisation du système optique sur l'un des éléments d'objet de ladite scène adaptés à l'ajustement de ladite focalisation en fixant le maximum de flux lumineux provenant dudit élément d'objet et capturés par les pixels dudit capteur de lumière pixélisé, et
- des moyens appropriés pour réduire la profondeur dudit élément d'objet à partir de l'ajustement de ladite focalisation sur ledit élément d'objet de ladite scène, **caractérisé en ce que** :
- ledit système optique comprend également un système d'imagerie télécentrique à relais (3, 4) positionné approximativement dans le plan d'image de ladite lentille, capable de relayer l'image desdits éléments d'objet sur ledit capteur de lumière pixélisé par le biais d'un système de microlentilles (41, 42 ,43), et un modulateur spatial de lumière (5), également pixelisé, connecté à l'entrée dudit système d'imagerie à relais,
où l'axe optique de chaque microlentille passe par le centre d'un pixel différent dudit capteur de lumière pixelisé et par le centre d'un pixel différent dudit modulateur spatial de lumière,
où chaque microlentille est adaptée, en association avec ledit système d'imagerie à relais (3, 4) et ladite lentille (1) pour capturer l'image d'un élément d'objet de la scène sur le pixel dudit capteur de lumière pixelisé situé sur l'axe optique de la microlentille, par le pixel dudit modulateur spatial de lumière qui est également situé sur l'axe optique de la microlentille,
où les pixels du modulateur spatial de lumière sont répartis dans un groupe ou dans une pluralité de groupes de pixels adjacents (G1,..., Gi,... GN),
- ledit dispositif comprenant également des moyens de contrôler les pixels (51, 52, 53) du modulateur spatial de lumière (5) de sorte que, simultanément, dans chaque groupe, un pixel soit dans l'état de passage tandis que tous les autres pixels du même groupe sont à l'état de blocage, et de sorte que, dans chaque groupe, chaque pixel passe successivement à l'état de passage.

2. Dispositif d'estimation de la profondeur selon la revendication 1, **caractérisé en ce que** chacun desdits groupes comprend le même nombre de pixels.

3. Dispositif d'estimation de la profondeur selon la revendication 2, **caractérisé en ce que**, dans chaque groupe, les pixels sont organisés géométriquement de la même manière, et **en ce que** les moyens de contrôler les pixels du modulateur spatial de lumière (5) sont adaptés de sorte que, dans chaque groupe, chaque pixel passe successivement à l'état de passage dans le même ordre géométrique.

4. Dispositif d'estimation de la profondeur selon l'une des revendications 2 à 3, **caractérisé en ce que** chaque groupe contient 3x3 pixels.
